# EUROPEAN PATENT APPLICATION

(11) **EP 4 049 848 A1**
(43) Date of publication of application: **31.08.2022**
(21) Application number: 22158775.1
(22) Date of filing: 28.08.2020
(51) Int. Cl.: B41J 29/17, B41J 2/17

(54) **A PRINTER INK MIST COLLECTION SYSTEM**

(30) Priority: 30.08.2019 US 201962894323 P; 27.08.2020 US 202017004674; 27.08.2020 US 202017004700; 27.08.2020 US 202017004868; 27.08.2020 US 202017004886; 27.08.2020 US 202017004908
(62) Divisional of application: 20856501.0
(71) Applicant: Primera Technology, Inc., Plymouth, MN 55447 (US)
(72) Inventor: HAGSTROM, Erick, 352 Wise Ave., Wayzata MN, 55391 (US)
(74) Representative: Downing, Michael Philip

(57) **Abstract**

A printer ink mist collection system comprising a channel (202) extending from a print area to a filtration system (214) wherein the filtration system comprises one or more filters (228) and wherein the channel is configured to direct airborne ink and mist generated during printing to the filtration system, wherein the channel and filtration system are removable from a printer for purposes of cleaning the ink collection system, and wherein the print area is positioned within a length of the channel spaced apart from the filtration system such that printing occurs within at least a portion of the channel, and wherein the channel, filtration system and print area are positioned within a main body of the printer.

## Description

### CROSS REFERENCE TO RELATED APPLICATIONS

The present application is based on and claims the benefit of U.S. provisional patent application Serial No. 62/894,323, filed August 30, 2019; U.S. nonprovisional patent application Serial No. 17/004,674, filed August 27, 2020; U.S. nonprovisional patent application Serial No. 17/004,700, filed August 27, 2020; U.S. nonprovisional patent application Serial No. 17/004,868, filed August 27, 2020; U.S. nonprovisional patent application Serial No. 17/004,886, filed August 27, 2020; and U.S. nonprovisional patent application Serial No. 17/004,908, filed August 27, 2020, the contents of which are hereby incorporated by reference in their entirety.

### BACKGROUND

Printing with edible ink on food products is done for purposes of identifying, marking, decorating or personalizing the food product. For example, food products such as cookies can be passed under a print head ejecting edible ink on the top surface of the cookie, whether iced or plain, can be printed with a selected design.

Currently, a conveyor belt system or tray is used where one or more cookies are spaced apart in an array on the conveyor belt or tray and passed below the print head of the printer. Alternatively, labels comprised of edible paper can be printed with edible ink and applied to a food product with an edible adhesive such as frosting or icing.

Systems of the prior art that are able to print images on an array of food products supported on a conveyor belt or a tray with two or more columns of food products requires a larger and more expensive printer on the scale of a commercial printer. Such systems also usually require sophisticated sensing systems to locate the position of each food product for printing.

In the prior art systems, the loading and unloading of a food product on a tray or conveyor during printing is generally impractical. The conveyor or tray are often not accessible while products are being printed. It is also difficult to accurately load a food product on a moving conveyor or tray. It is also difficult to load a food product on a moving conveyor or tray without adversely affecting the print quality of the image currently being printed.

### SUMMARY

An aspect of the present disclosure relates to a printing system for printing images or content with edible ink on a surface of an edible food product. The edible food product printer of the present disclosure allows a user to print edible ink directly on food products at both low and higher volumes of food products. Moreover, the system includes a delivery tray that is external to a print window of the printer and is spaced apart from the path of the print head. The delivery tray is also stationary during the printing of food products but is configured to automatically and continuously deliver unprinted food products and receive printed food products such that the system is easy to reload with additional unprinted food products for printing and the process is open and visible for viewing and inspection, including for entertainment related to watching a printing process.

Another aspect of the present disclosure relates to a system for printing on a surface of a plurality of food products. The system includes a printer having a receiving arm that is extendable and retractable across a path of a print head of the printer and where the receiving arm is positioned to extend from the printer and retract into the printer to receive one of the plurality of food products and deliver one of the plurality of food products to a position below the print head and to return the one of the plurality of food products after the food product has been printed on. The system further includes a delivery tray spaced apart from the printer and having a plurality of surfaces spaced apart on the delivery tray where each surface is configured for supporting one of the plurality of food products thereon.

In another aspect of the present disclosure the delivery tray is configured to move in synch with the extension and retraction of the receiving arm to automatically deliver each one of the plurality of food products to the receiving arm in a sequential manner for printing on the food product and for receiving the returned printed food products for removal from the printer.

In one or more embodiments, a base is provided for operably supporting the delivery tray in a position spaced apart from the printer. In one or more embodiments, the surfaces of the delivery tray have one or more support sides for holding one or more sides of the food product and an opening therebetween for receiving an end of the receiving arm therebetween. In one or more embodiments, to facilitate delivery and return of food products between the print head and the delivery tray, the receiving arm is further configured to raise and/or lower such that a receiving surface of the arm is positionable in the opening. Raising the receiving arm allows for transfer of the food product from the delivery tray to the receiving arm and conversely, when the receiving arm returns the printed food product, the lowering of the receiving arm also drops the printed food product off on to the delivery tray. Additionally, or alternatively, the delivery tray can be raised and/or lowered for purposes of transferring the food product between the receiving arm and the delivery tray. In one or more embodiments, the surfaces have a positioning mechanism configured to guide the loading of each one of the plurality of food products onto the delivery tray.

In one or more embodiments, the delivery tray is constructed from a material comprising a metal such as stainless steel, or a plastic material and wherein the receiving arm is comprised of the same or a different material than the delivery tray. In one or more embodiments, the materials are food grade and have met all criteria to be deemed safe for food preparation, storage, and dining. In one or more embodiments, the plurality of food products are edible elements having a substantially flat surface, cookies, frosting sheets, rice paper, or combinations thereof.

In one or more embodiments, the system is configured to automatically and continuously deliver food products to the receiving arm for printing and receiving printed food products from the receiving arm after printing wherein the system prints pre-selected content on one of the plurality of food products at a time. In one or more embodiments, movement of the delivery tray is synchronized with the extension and retraction of the receiving arm such that the delivery tray advances when the receiving arm is extended, extending, retracted or retracting and is stationary or lowered when the receiving arm is fully extended. The receiving arm may be fully extended and ready to receive a subsequent food product from the delivery tray as the delivery tray moves.

In yet another aspect of the present disclosure, a method of automatically printing a selected plurality of food products includes loading at least one food product on to a support surface of a delivery tray spaced apart from a printer; extending a receiving arm supported by the printer towards the delivery tray for removing at least one food product from a first support surface of the delivery tray; and retracting the receiving arm into the printer for positioning the food product below a print head of the printer. Once positioned, printing content directly on a surface of the food product can occur and extending the receiving arm supported by the printer towards the delivery tray allows for returning at least one food product to the delivery tray after printing.

The method may be carried out continuously such that extending the receiving arm towards the delivery tray for removing the second food product from the second support surface of the delivery tray and retracting the receiving arm into the printer for positioning the second food product below a print head of the printer can be carried out a predetermined number of times. After printing content directly on a surface of the second food product and extending the receiving arm towards the delivery tray for returning the second food product to the delivery tray, the delivery tray is then moved to deliver a subsequent food product to the receiving arm. The receiving arm can maintain the extended position as the delivery tray moves to the next food product for delivery by advancing the delivery tray to a third support surface of the delivery tray supporting a third food product continues the process.

The receiving arm may also be raised and lowered when the receiving arm is extended for purposes of ensuring delivery of unprinted food products and return of printed food products, respectively between the print head and the delivery tray.

Another aspect of the present disclosure relates to a printer with a hinged housing. The housing has an upper portion and a lower portion with a cavity there between and wherein the upper portion and lower portion are connected by one or more hinges such that the housing opens about the hinged connection between the upper portion and the lower portion to expose the cavity there between.

The upper portion is positioned above the lower portion and the hinged connection allows the upper portion to be lifted up with respect to the lower portion to expose one or more printer components for access through the cavity. The one or more hinges secure the upper portion to the lower portion and wherein the one or more hinges are positioned on a same perimeter side of the housing such that the housing opens about one side. The one or more hinges are provided on a rear side of the housing to connect the upper portion to the lower portion and wherein a front side of the housing comprises an opening for positioning a print surface a print head and within a print area within the cavity.

The upper portion has a top and one or more perimeter side walls extending downwardly therefrom and wherein the lower portion comprises a floor and one or more perimeter side walls extending upwardly therefrom such that a rear perimeter side wall of the upper portion and a rear perimeter side wall of the lower portion are connected by the one or more hinges spaced apart along the rear perimeter side wall. The upper portion supports a frame for operably retaining one or more printer components selected from the group consisting of a print head, a gantry for linear movement of the print head there along, a controller for the printer system, a print head ink maintenance system for cleaning one or more nozzles of the print head or combinations thereof.

The lower portion comprises a floor and supports one or more removable components for the printer comprising an ink mist collection system, a debris tray or a combination thereof. In one or more embodiments, the printer is a printer for printing on the surface of a food product and wherein one of the upper portion or lower portion operably supports a receiving arm that is extendable and retractable into the cavity and across a path of a print head of the printer for providing food products to the print head for printing thereon. The lower portion has a floor configured to be removably coupled to a housing of a motorized base which operably supports a delivery tray that is operational in synch with the receiving arm.

The printer is openable about the hinged connection to expose one or more removable components for cleaning, service or replacement wherein the printer is openable and closeable manually and without tools.

Yet another aspect of the present disclosure relates to a printer having a multi-piece housing wherein the multi-piece housing comprises two hinged connections including a first hinged connection between a base housing and printer body housing and a second hinged connection between the printer body housing and a cover portion for first side access to the printer body housing such that the hinged connections allow for selective manual access to the components of the printer.

The first hinged connection is positioned on a second side of the printer and the second hinged connection is positioned on a first side of the printer and wherein the first and second sides are opposing sides of the printer. The first side is a front of the printer and the second side is a rear of the printer. The base housing comprises a floor, and three side walls extending upwardly therefrom such that one side is an open side in addition to an open top of the base housing. The printer body housing comprises a top and three side walls extending downwardly therefrom such that one side is an open side in addition to an open bottom of the printer body housing.

In one aspect, the cover portion housing comprises a top and three side walls extending downwardly therefrom such that one side is an open side in addition to an open bottom and wherein the second hinged connection connects the open side of the cover portion and the open side of the printer body housing such that when closed, the cover portion and the printer body housing enclose the printer components operably supported by the printer body housing with a top and four perimeter side walls. In one aspect, surfaces for printing are provided to a print head through the open side of the base housing.

The base housing is comprised of aluminum, stainless steel, a food grade metal, hard plastic or a combination thereof. The printer body housing is comprised of aluminum, stainless steel, a food grade metal, hard plastic or a combination thereof. The cover portion is comprised of aluminum, stainless steel, a food grade metal, hard plastic, or a combination thereof.

Yet another aspect of the present disclosure relates to a printer system wherein the working components and various debris collection and maintenance components are easily accessible for cleaning and/or removal or replacement. The printer system has a main body and a support base that are connected together in a manner that provides a cavity there between and wherein one or both of the main body and the support base operably supports one or more print components such that when in a closed position, the printer system accepts substrates for printing thereon. The main body and the support base are also pivotally or hingedly connected such that the main body and the support base provide a printer system that is openable, allowing the main body and support base to remain connected while opening to expose the cavity and the interior components of the printer for maintenance, service, and cleaning.

In one aspect, the printer system is a printer for printing images or other content, generally with edible ink, on a surface of an edible food product. The edible food product printer of the present disclosure allows a user to print edible ink directly on food products at both low and higher volumes of food products.

Another aspect of the present disclosure relates to a spent printer ink collection system comprising a channel extending from a print area to a filtration system wherein the filtration system comprises one or more filters and wherein the channel is configured to direct airborne ink and mist generated during printing to the filtration system and wherein at least one of the channel and filtration system are removable from a printer for purposes of cleaning the ink collection system.

The channel comprises one or more side walls and the channel has an opening near the print area for entry of airborne ink and mist. The channel is configured to direct the airborne ink and mist from the print area to the filtration system. Air flow may be introduced into the channel to direct the airborne ink and mist to the filtration system. The filtration system at least partially extends into the channel to collect airborne ink and mist directed into the channel from the print area.

Another aspect of the present disclosure relates to a printer having a system for collecting airborne ink mist from the printer. The printer has a print head movable within a print area, the print head configured to accept and dispense ink from one or more ink cartridges; a ink mist filtration system configured to capture at least one of airborne ink mist or ink droplets; and a channel extending from the print area to the ink mist filtration system and configured to direct the ink mist from the print area to the filtration system.

In one or more embodiments, the printer comprises a main printer body and a support base wherein the main printer body is positioned above the support base and a cavity is provided between the main printer body and the support base and wherein the print area is positioned within this cavity.

The one or more hinges secure the main printer body to the support base such that a hinged connection is provided for accessing the cavity. The hinged connection allows for access to an interior area of the channel for cleaning collected ink mist from the channel or filtration system. The channel directs airborne ink mist or unused ejected droplets of ink away from the print area and towards to the filtration system for collection. In one or more embodiments, the printer has a receiving arm supported by the printer and extendable and retractable into the cavity and across a path of a print head of the printer to deliver substrates to the print area for printing and remove printed substrates from the print area.

In one or more embodiments, the filtration system comprises a filter and wherein the filter is removable for cleaning. The filter may be supported in a filter holder.

In one or more embodiments, the printer is configured for printing on a surface of one or more food products and wherein the food products are delivered and received within the cavity for printing thereon. In one or more embodiments described herein, the substate comprises a food product or edible element having a substantially flat surface, cookies, frosting sheets, rice paper, or combinations thereof.

Another aspect of the present disclosure relates to a method of collecting airborne ink mist from a printer. When printing content on a substrate with ink ejected from one or more ink cartridges carried by a print head, directing airborne ink mist generated during ejection of the ink and not deposited on the substrate away from a print area of the printer through a channel to a filtration system comprising one or more filters allows for collecting the airborne ink mist in a cleanable system rather than allowing the ink mist or spent droplets to collect or deposit on various interior surfaces and/or working components of the printer. Cleaning the collection system and removal of the ink mist includes accessing the channel and filtration system within the printer for cleaning the channel and filter after collection of ink mist.

Accessing the channel and filtration system includes opening the printer via a hinged connection between two portions of the printer wherein the channel and filtration system are housed within a cavity between the two portions of the printer.

Another aspect of the present disclosure relates to a system for printing on a surface of a plurality of food products. The system comprises a printer configured for printing edible ink on a surface of the food products and a removable debris collection tray for catching food product debris positioned within the printer and configured to capture debris generated during at least one of delivery of food products to the printer, printing on the food products, and removal of printed food products from the printer.

The printer has a print head and a receiving arm supported by the printer and extendable and retractable across a path of a print head of the printer for delivery and return of food products to a position below the print head for printing thereon. The removable debris collection tray is at least partially positioned below a travel path of the food product within the printer and between the print head and receiving arm. In one or more embodiments, the debris collection tray comprises a floor with sidewalls extending upwardly therefrom with an open top section for catching food product debris therein. In one or more embodiments, the debris collection tray has a length and width wherein the length extends substantially from a first position below a retracted position of the receiving arm for printing on the food product and a second position below an extended position of the receiving arm where the arm receives and returns food product to a delivery tray.

Another embodiment of the present disclosure relates to a method of catching and removing debris from a system for printing on a surface of food products. Catching and removing debris from a printer configured for printing edible ink on a surface of the food products and printing on a surface of one or more food products includes collecting debris from the one or more food products within the printer with a debris collecting mechanism positioned within the printer and removing the debris collecting mechanism from the printer. The debris collecting mechanism can then be cleaned or cleared of the debris and the mechanism replaced in the printer for catching and removing debris from subsequent printing processes.

The debris collecting mechanism is positioned below a print area within the printer. Further, the debris collecting mechanism is positioned below a travel path of the food products within the printer. In one or more embodiments, the debris collecting mechanism is a tray.

Yet another aspect of the present disclosure relates to a removable debris collecting mechanism for a printer, the debris collecting mechanism comprising a tray having a floor and integral perimeter side walls configured for catching debris from substrates printed on by the printer and tray positioned within the printer below a travel path of the substrate within the printer.

In one or more embodiments, the debris comprises crumbs as the substrate is a food product. In one or more embodiments, the debris collection tray is constructed of stainless steel, aluminum, or combinations thereof. In one or more embodiments, the plurality of food products are edible elements having a substantially flat surface, cookies, frosting sheets, rice paper, or combinations thereof.

An aspect of the present disclosure relates to an ink maintenance system for a printer. The system has a first tray having a base and a plurality of side walls, the first tray having a first length and an open top along the length. The system further includes a fan and a filter. The system catches ink from a printer when removably installed within a printer and does so according to NSF standards for food safety without the use of a foam material, such as a foam based filter. Thus, there is no foam within the first tray.

The first tray is a catch tray for catching ink droplets from one or more nozzles operably connected to an ink cartridge. The fan is coupled to a second tray. The second tray has a plurality of side walls, the second tray having a second length and an open top and an at least substantially open bottom along its length. The filter is also positioned within the second tray. The second tray is positioned on top of the first tray and covering at least a portion of the length of the open top of the first tray.

The second tray houses the filter and the fan and wherein the second tray at least partially covers the open top of the first tray. The first tray and second tray are removably coupled to one another to form an assembly for positioning within a printer. The filter is removable from the second tray for cleaning or replacement of the filter.

The first tray and filter are cleanable for reuse and wherein the first tray and second tray are constructed from aluminum, stainless steel or combinations thereof. Another aspect of the present disclosure relates to a removeable ink maintenance system for a printer comprising a first tray having a base and a plurality of side walls, the first tray having a first length and an open top along the length wherein the first tray is removable from a printer system, cleanable for re-use or a combination thereof; a fan; and a filter, wherein the filter is removable from the ink maintenance system, is cleanable for re-use or a combination thereof.

The ink maintenance system is incorporated into a printer system for printing on a surface of a plurality of food products. The incorporated system includes a printer having a print head and configured to receive an ink cartridge and a receiving arm supported by the printer and extendable and retractable across a path of a print head of the printer to sequentially deliver one of the plurality of food products to a position below the print head for printing. The system may further comprise a delivery tray spaced apart from the printer, and configured to deliver each one of the plurality of food products to the receiving arm for printing thereon. An ink cartridge maintenance system comprising an ink catch tray, a filter and a fan wherein the ink cartridge maintenance system is removably positioned within the printer.

The ink cartridge maintenance system is positioned adjacent a standby position of the print head within the printer. The ink cartridge maintenance system comprises a filter holder for supporting the filter therein and wherein the fan is coupled to the filter holder. The first tray is removable from the printer for cleaning.

Another aspect of the present disclosure relates to a method of cleaning print nozzles in a printer. The nozzles are cleaned by positioning a print head of the printer in a standby or cleaning position within the printer; ejecting ink from one or more print nozzles into an ink maintenance system within the printer such that the ejected ink is collected in at least one of a catch tray or a filter of the ink maintenance system; removing the ink maintenance system from the printer for cleaning of at least one of the catch tray or the filter. The system is then replaceable into the printer for subsequent use.

When cleaning the ink maintenance system, the system can be further cleaned by separating the catch tray and filter from one another and removing the filter from a filter holder.

Yet another aspect of the present disclosure relates to a printing system for printing images or content with edible ink on a surface of an edible food product. The edible food product printer of the present disclosure allows a user to print edible ink directly on food products at both low and higher volumes of food products. The ink maintenance system described herein can be incorporated therein.

### BRIEF DESCRIPTION OF THE DRAWINGS

FIG. 1 is a perspective view of a food product printing system.
FIG. 2 is a perspective view of a food product printing system with a cover portion opened for exposing interior portions of a printer portion of the system.
FIG. 3 is a top perspective view of the food product printing system having an automatic delivery tray component removed and a cover of a printer removed.
FIG. 4 is a side view of the food product printing system with the automatic delivery tray component removably secured to a tray base portion.
FIG. 5 is a top view of the delivery tray.
FIG. 6 is a perspective view of the tray base portion.
FIG. 7 is a top view of the food product printing system with food product for printing loaded thereon.
FIG. 8 is a perspective view of the printing system opened about a hinged connection and with the cover portion open.
FIG. 9 is a side view of the printing opened about the hinged connection and with the cover portion open.
FIG. 10 is a side view of the printing system with the cover portion open.
FIG. 11 is a front perspective view of the ink maintenance collection system.
FIG. 12 is an exploded view of the ink maintenance collection system within a printer, with the housing and additional printer elements removed for illustration.
FIG. 13 is a perspective view of the debris tray on a base portion of the printer and a perspective view of an ink maintenance system.

### DETAILED DESCRIPTION

A food product printing system of the present disclosure includes a printer system for printing an image on a surface of the food product. The print surface may be an actual surface of the food product itself. The printer system comprises a printer having a receiving arm and a delivery tray supported on a base. The system may also be provided with a plurality of different delivery trays, each tray configured for continuous delivery of a varied number of food products, and/or for food products of different or specific dimensions.

The receiving arm is configured for receiving a food product from the delivery tray and moving the food product from the delivery tray into the printer and into a printing position. The printing position is substantially below a print head of the printer such that the surface to be printed on is in the path of the print head. Once the food product is printed, the receiving arm then returns the printed food product to the delivery tray. The delivery tray is also configured to move in one or more directions in order to continuously and automatically deliver a plurality of food products sequentially to the receiving arm.

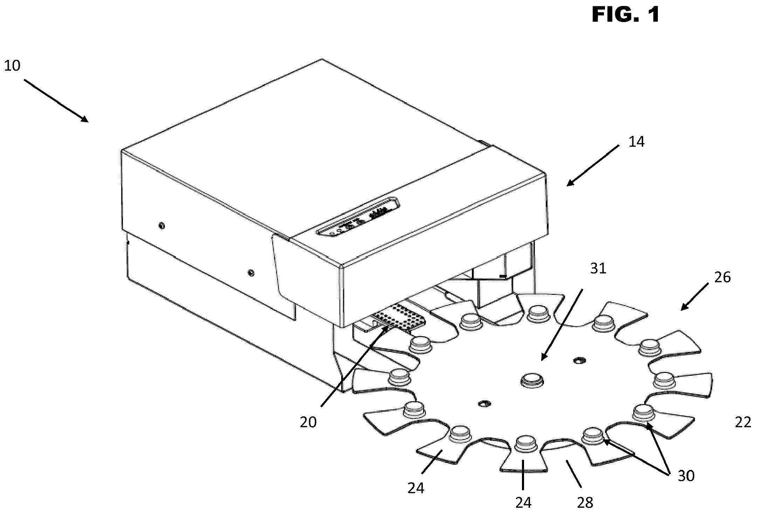

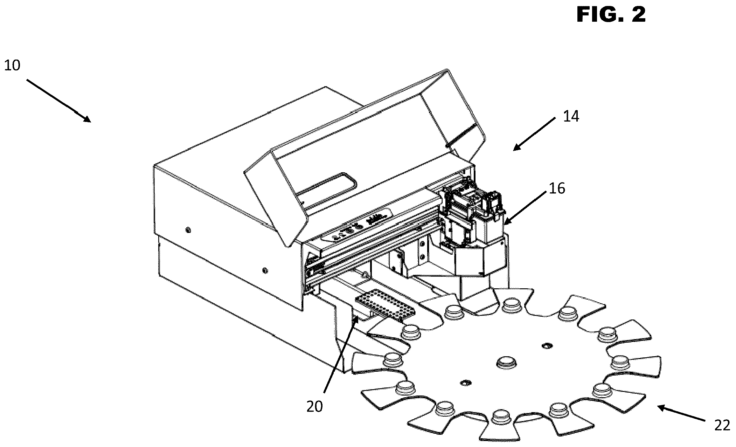

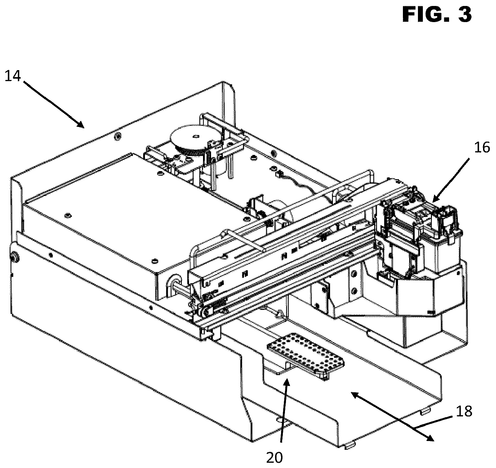

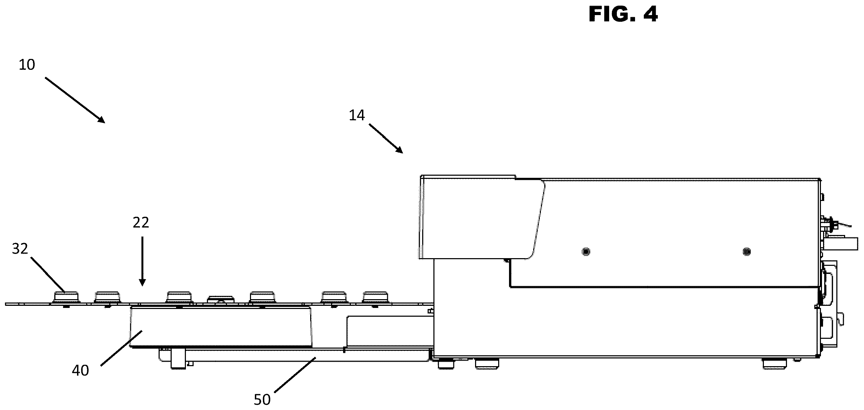

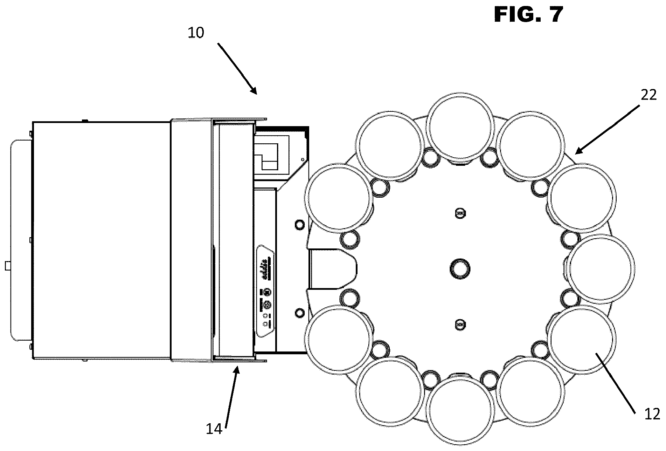

One embodiment of the printing system 10 is illustrated generally in FIGS. 1-7. The printing system 10 is configured to receive a food product 12 from a delivery tray 22, to print on a surface of the food product 12 and return the food product 12 to the delivery tray 22. The system is also configured to do so automatically and continuously for a pre-determined number of food products 12. The system 10 comprises a printer 14 having a print head 16 and nozzles (not shown) wherein the print head 16 and nozzle are configured for printing with edible ink. The print head 16 can be a carriage for an ink cartridge where the ink cartridge may be filled with edible printer ink. The printer 14 also supports an extendable and retractable receiving arm 20 therein.

The receiving arm 20 is operably connected to a power source within the printer 14. The receiving arm 20 is extendable and retractable with respect to the position of the path of the print head 16. The receiving arm 20 has a first end and a second opposing end and a substantially flat receiving surface extending therebetween. The first end is operably connected to a mechanism for retracting and extending the arm 20. The second end and at least a portion of the receiving surface of the receiving arm 20 are configured for extending outwardly from the printer 14. When extended, the receiving arm 20 may receive a food product, hold a food product, and/or return a printed food product to the delivery tray 22. The receiving arm also holds or supports the food product within the printer 14 and during printing on the surface of the food product 12.

With respect to the printer 14, the print head 16 moves linearly back and forth along a gantry in the manner of a standard inkjet printer for ejecting (edible) ink towards the print surface and thus printing pre-selected content on a print surface positioned below the path of the print head 16. The printer 14 is in communication with a controller wherein software may be used to control printing of the content on one or a plurality of food products.

In further detail, the receiving arm 20 moves in a direction perpendicular to the print head path such that the receiving arm 20 extends and retracts across or through the path of the print head 16 as illustrated by arrows 18. In one embodiment, the receiving arm 20 is a substantially flat, rectangular support plate which extends towards a holder 26 of the delivery tray 22 in order to engage with and remove the food product 12 from the delivery tray 22 as well as to return printed food products to the delivery tray. A top surface of the receiving arm 20 is a receiving surface for food product and may be textured or otherwise provided with a surface to increase a co-efficient of friction between the receiving arm 20 and the food product for retaining the food product on the arm 20.

The receiving arm extends to receive or return the food product 12 and retracts from the tray 22 into the printer 14 and into a position below the print head 16 for printing. Once content is printed on a food product, the receiving arm 20 then extends to return the food product 12 back to the delivery tray 22. The delivery tray 22 then advances to provide a second unprinted food product 12 to the receiving arm 20. The receiving arm 20 is also configured for vertical movement such that the receiving surface of the receiving arm 20 is movable between two positions, a raised and a lowered position, where these positions allow the receiving arm 20 to retrieve and return food products 12 with respect to the delivery tray 22, and may allow for advancing of the delivery tray 22 when the receiving arm 20 is extended. Once loaded, the receiving arm 20 is then retracted to the printing position with the food product 12 thereon. This process continues on continuously and automatically per a pre-determined amount of food products are printed. It is also contemplated that the delivery tray may also be raised or lowered in order to allow for the delivery tray 22 to advance to a subsequent holder 26 or opening 28 on the delivery tray 22 for automatically delivering, receiving and thus printing on a plurality of food products 12.

The delivery tray 22 is configured with a plurality of holders 26 as described in further detail below. Each holder 26 is configured to receive and support a food product 12 and deliver said food product 12 to the receiving arm 20. The delivery tray 22 illustrated herein includes twelve (12) of holders 26, however, trays for holding fewer or more food products are contemplated and within the scope of this disclosure. The number of holders on a tray may be adjusted based on the type or size of item being printed.

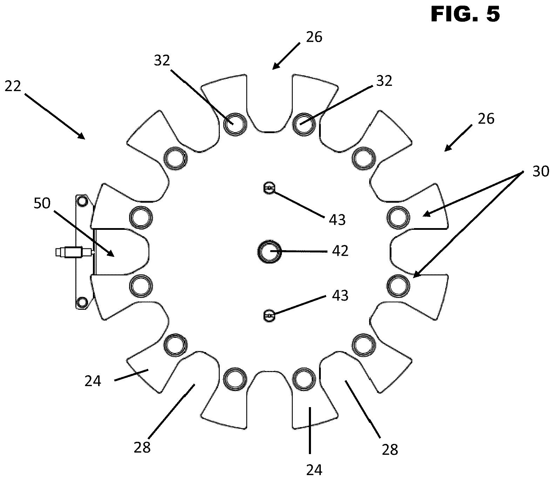

Referring to FIG. 5, in one embodiment, each holder 26 has two support sides 24 extending from a center 28 of the tray 22 and an opening 28 between these support sides 24. The food product is supported on the holder by way of resting on top of the two support sides 24 of the holder. The opening 28 between the sides 24 of the holder 26 is configured to receive the receiving arm 20 therein and allows for the receiving arm 20 to take a position for receiving and returning the food product to the delivery tray 22. That is, the receiving arm 20 can extend into this opening 28 and contact a bottom surface of the food product 12 that is supported on the sides 24 of each of the holders 26. The receiving arm 20 then also supports the food product 12 thereon when retracting the food product 12 into the position for printing.

Each holder 26 is configured to support or otherwise hold one or more sides, edges or perimeter lengths of the food product 12 via contact of the support sides 24 with the bottom surface of the food product 12. The holders 26 may have one or more positioning mechanisms 30 for directing a position of the food product 12 when loaded onto the delivery tray 22. Positioning mechanisms 30 are provided, for example, on each of the support sides 24. Utilizing the positioning mechanisms 30 to set the position of the food product 12 during loading of the delivery tray 22 ensures delivery of the food product 12 to the receiving arm 20 such that the food product is balanced on and supported by the receiving arm 20 and ensures the surface of the food product is centered for printing of the content on the food product.

The positioning mechanisms 30 each include a pair of pegs 32 protruding upwardly from the tray 22 and configured to mark the placement location for a round food product 12 on the delivery tray 22. Each one of the pair of pegs 32 protrudes from a location on a corresponding one of the support sides 24 of each holder 26. A forward surface of the food product 12 contacts the pegs 32 to ensure sufficient placement for delivery to the receiving arm 20 when the food product 12 is placed on the holder 26. The holders 26 may have dimensions which allow the position of the food product 12 to be loaded onto the tray 22 in a known position. When the food product 12 is delivered to the receiving arm 20, the position of the food product 12 print surface with respect to the print head 16 can be known when the receiving arm 20 is retracted. In some embodiments, this allows for the elimination of sensors or other position or item detecting means and eliminates other delays due to location or position detection before printing. Instead, upon retraction of the receiving arm 20, printing can begin and the automated process can proceed continuously and efficiently at an increased speed.

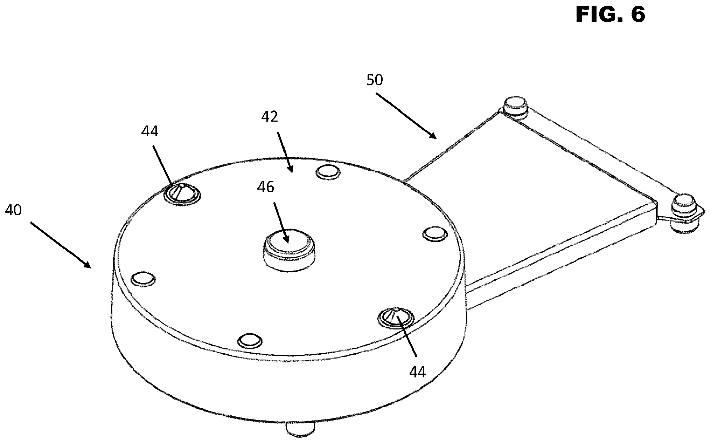

As illustrated in FIG. 6, positioned near the printing system is a base 40 for providing power and controlling advancement and vertical positioning of the delivery tray 22. The base 40 is spaced apart from the printer 14 and may be removably connected to the printer 40 via a stabilization arm 50 that extends from a housing of the base 40 to removable connection or coupling to a housing of the printer 14. The arm 50 also positions the base 40 at an adjustable distance from the printer 14, and thus the receiving arm 20, so as to accommodate the delivery tray 22 supported thereon in a manner to cooperate with the receiving arm 20. The base 40 may also be operably connected to the controller and to the power supply of the printer 14 so as to control movement of the tray 22 in a manner synchronized with the printer 14.

The base 40 is configured with one or more mechanisms for operably engaging and supporting the tray 22 thereon. In one embodiment, the base 40 comprises one or more drive posts 44 and a centering pin 46, which allow for placing the delivery tray 22 thereon as the tray comprises reciprocal mechanisms for mating with the drive posts 44 and centering pin 46. This system allows various delivery trays 22 of different dimensions and arrangements for holding food products 12 to moveably connect with the base 40. While the above interface between the tray 22 and base 40 is described, alternative interfaces and non-locking mechanisms for transferring movement generated at the base 40 to the tray 22 for controlled advancement of the delivery tray 22 are contemplated.

The base 40 has a rotatable element 42, such as a housing cover or plate 42 which supports the drive posts 44 and locating pin 46. The base 40 then transfers motion to the delivery tray 22 to advance the position of the tray 22 about the openings 28. The base 40 can be controlled such that the delivery tray 22 advances from one opening 28 to the next adjacent opening 28 automatically after a food product 12 has been returned to the tray 22 from the printer 14 by the receiving arm 20, for example.

The delivery tray 22 and base 40 may be a carousel for continuous delivery, loading and reloading of unprinted food products after printed food products have been returned to the delivery tray 22 and subsequently removed. While a rotatable tray is illustrated herein, the delivery tray 22 may also be linearly advanced, move in multiple directions, or move in the manner of a conveyor belt, by way of non-limiting examples. That is, once printed and returned to the delivery tray 22 as the delivery tray 22 advances to the next adjacent opening 28 for purposes of delivering one or more subsequent food products 12 to the printer 14, the printed and advanced food product may be removed and a new unprinted food product 12 placed on the tray 22. Thus, delivery of unprinted food products and receipt of said food products after printing can be essentially endless, limited only by supply or selection of a predetermined amount to be printed, for example.

The base 40 may comprise its own power source for providing rotational power to the rotatable plate 42 or the base 40 may be operably connected to the power source of the printer system 10. The base 40 is also in communication with the controller (not shown) which controls extension and retraction of the receiving arm 20 and printing of an image on a received food product 12 such that the rotation of the delivery tray is synchronized with the extension and/or retraction of the receiving arm 20.

In the embodiment illustrated, the base 40 provides the power to rotate the delivery tray 22 between various positions which include alignment of a first and one or more subsequent openings 28 with the extended receiving arm 20 as well as rotating the delivery tray 22 to advance the delivery tray 22 to a next opening 28 while the receiving arm 20 is extended. In embodiments where the delivery tray 22 may be in one of two positions, the raised or lowered position, depending on whether an item is to be delivered or returned to the tray 22 and to prevent the receiving arm 20 from interfering with advancing or rotation of the delivery tray 22, the base 40 then also allows for moving the delivery tray 22 between the two positions and thus is configured to raise and lower the tray or tilt the tray 22 upwardly or downwardly at the opening 28 positioned for delivery or return of the food product 12. In such an embodiment, as the receiving arm 20 is extended and positioned in the opening 28, the upper surface of the receiving arm 20 may be substantially level to the top surface of the delivery tray 22. To ensure or facilitate delivery of the food product 12 supported on the delivery tray 22, the delivery tray 22 is downwardly tilted or lowered in the direction of the receiving arm 20. This allows the receiving arm 20 to contact and support a bottom surface of the food product 12 and remove support by the delivery tray 22 thereby transferring the food product 12 to the receiving arm 20. Conversely, when the receiving arm 20 is returning a food product after printing thereon, the delivery tray 22 may be provided in a lowered position and then tilted upwardly or raised after the receiving arm 20 supporting the printed-on food product 12 is extended into the opening 28. This allows the holder 26 to lift the food product off the receiving arm 20 for removal from the printing queue.

In an additional or alternative embodiment, a printer system may have a hinged housing allows for easy access to the interior components of the printer and to the print area of the printer, making it easier to clean and service the printer without disassembly of the housing or the use of tools. The printer system described herein is a printer having a main body or an upper portion, and a support base or lower portion. The two portions are connected in a manner that allows the upper portion of the printer to lift up for full access to the interior parts and print area of servicing and cleaning of one or more components. The upper portion lifts up to expose the printer components carried by both the upper and lower portions while remaining connected to the lower portion such that accessing the interior components of the printer is easy. Replacement of the upper portion on top of the lower portion is easy and likewise does not require tools.

In one embodiment, the connection is a hinged connection where one or more hinges enable opening the printer. The housing may also have one or more hinged covers for targeted access to print components, for example, those carried by the upper portion.

The printer system may also have one or more maintenance or collection systems for ink, ink mist, crumbs, debris or the like, a substrate receiving arm or other print item delivery structures in a print area of the printer. These systems and structures may be removable for cleaning and removal being made easier by the openable printer system described herein.

In an embodiment illustrated herein, the hinged printer system is a food product printing system that includes a printer system for printing an image on a surface of the food product. The print surface may be an actual surface of the food product itself. The printer system comprises a printer having a receiving arm and a delivery tray supported on a base spaced apart and separable from the printer. While the embodiment illustrated herein is a food product printing system, the embodiments described herein may be incorporated into a printing system for use on non-food items and other items, substrates or products having a height, mass or dimensions for printing in the print area described herein.

Opening the printer in the manner described herein allows for easy visual and physical access to both the upper portion and lower portion of the printer for inspection and cleaning. Opening the printer as described herein also allows for easy inspection, cleaning, and/or removal of various collection and cleaning elements of the printer system such as a print debris or crumb collection tray, ink mist or printed ink mist filtration system, and/or a print cartridge maintenance tub and associated filter.

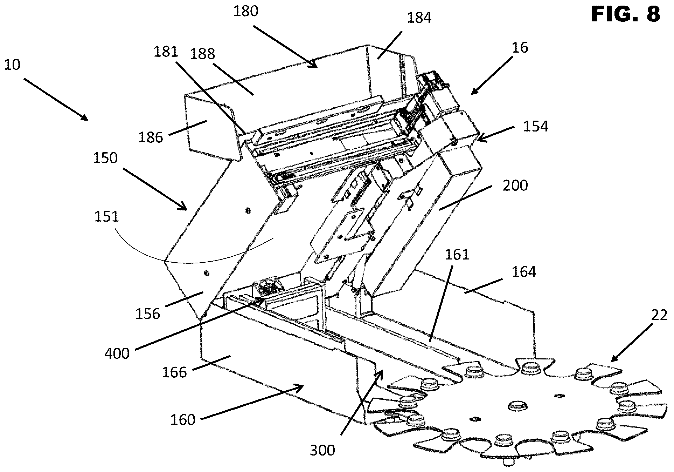

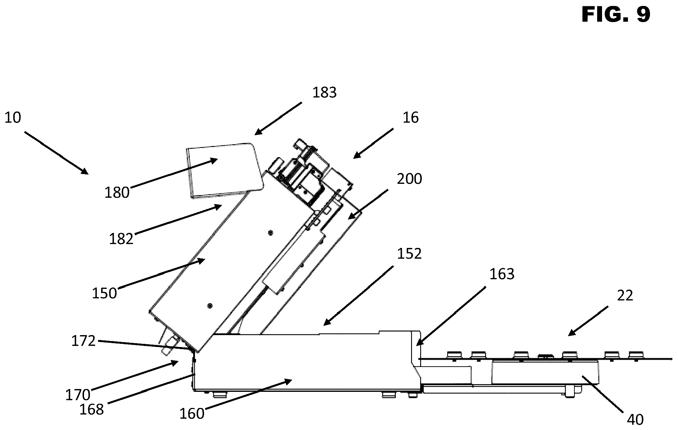

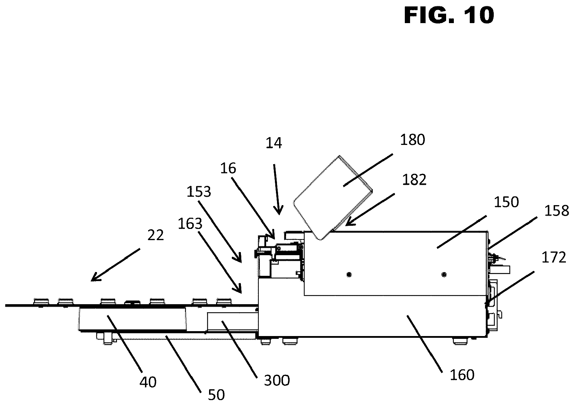

As illustrated in further detail in FIGS. 8-10, the printer system 10 is configured as an openable printer system 10. The illustrated embodiment is a table-top printer system 10, however the printer system described herein may be scaled up for industrial use. One example of a mechanism for opening the printer system 10 is a hinged connection 170 between an upper printer body 150 and a lower printer base 160. One or more hinges 172 are positioned along a perimeter length of the printer system 10 and operably connect the upper printer body 150 and lower printer base 160. For example, the hinges 172 are provided along a rear side of the printer system 10 such that a front side of the printer system 10 is a feed side of the printer system 10 wherein products are received for printing therein. In one embodiment, food products 12 enter the printer system 10 in the front and are directed into a cavity 152 between the upper print body 150 and the lower print base 160 for printing within the printer system 10.

The upper printer body 150 supports a frame that allows for supporting one or more print components of the printer, not limited to a print head 16 and carriage and gantry for movement of the print head 16. The print head 16 may be a carriage for holding one or more ink cartridges. The frame may also support an ink maintenance system which is positioned at a standby location of the print head 16 and is configured with a tub for receiving ejected ink during a maintenance or cleaning operation between printing operations and further comprises a filter for catching airborne ink particles and preventing said particles from settling on other printer components. The frame may also carry electronics, control and power elements for the printer and for operably connecting the printer to control software and power sources.

The lower support base 160 may then support a removable debris tray 300 for collecting debris generated during printing as the debris tray is positioned below a print area 18 of the printer 14. The debris tray may slide into and optionally couple to one or more interior surfaces of the lower support base 160. The lower support base 160 may then also support an ink mist collection system 400 which can be positioned in a rear or back portion of the printer 14 within the print area 18 and with a directed air flow to collect spent airborne ink or ink mist and prevent the ink from settling or collecting on other elements within the printer.

As illustrated in FIGS. 8-10 the housing of the printer system 10 described herein is a multi-piece housing with two hinged connections. The upper body housing 150 is connected via one or more hinges 172 along a perimeter side 154 wall to the lower base housing 160 along a corresponding perimeter side wall 164. The upper body housing 150 comprises a top portion 151 and one or more side walls 154, 156, 158 extending downwardly from the perimeter of the top 151 and one side 153 of the top 151 is open. Similarly, the lower base housing 160 comprises a floor 161 and one or more side walls 164, 166, 168 extending upwardly from the perimeter of the floor 161 and one side 163 of the floor 161 is open. The open side 163 allows for an opening to the cavity 152 when the printer housing is closed and through which items are provided to the interior of the printer 10 for printing thereon. This is an operational access opening, which may be considered a front side of the printer 10. The hinged connection 170 may then be provided on a side opposing the operational access opening and thus positioned along a rear side of the printer. For example, the hinges may operably secure one side wall 164 of the lower base housing 160 to a corresponding side wall 154 of the printer body housing 150.

A cover 180 may then be provided and connected via one or more hinges 182 to cover the open side 153 of the top 151 and thus protect a print head 16 or other printer system elements supported by the upper body 150. The cover 180 similarly has a top 181 and side walls 184, 186, 188 with an open side 183 such that the open side 183 is connected to the open side 153 of the upper body housing 150. For example, the hinges 182 connect the top 151 along the open side 153 to the top 181 of the cover along its open side 183. Thus, the hinges 172 and 182 provided hinged connections on opposing sides of the printer 10.

The printer 10 can then be opened and accessed at one or more locations for full or partial access to the printer components within the housing. Each hinged connection allows the printer to be opened up about the hinged connection manually and without tools. The printer can be similarly manually closed to enable printing without tools. When full access is provided, one or more components of the printer system 10 can be manually removed for cleaning.

As these elements and the additional elements described further below are positioned within the printer system 10 they are otherwise inaccessible without disassembly of the printer 10. However, the hinged printer housing and the construction described herein allow for easy access to these elements for service, cleaning, and replacement wherein such access is now tool-less and can be done manually without assistance.

One embodiment of the printing system 10 as illustrated in FIGS. 8-10 is configured to receive a food product 12 from a delivery tray 22 in the substantially the same manner as described previously above with respect to the embodiment of FIGS. 1-7 to print on a surface of the food product 12 and return the food product 12 to the delivery tray 22. The system is also configured to do so automatically and continuously for a pre-determined number of food items. The system 10 comprises a printer 14 having a print head 16 and nozzles (not shown) wherein the print head 16 and nozzles are configured for printing with edible ink. The printer 14 also supports an extendable and retractable receiving arm 20.

With respect to the printer 14, the print head 16 moves linearly back and forth along a gantry in the manner of a standard inkjet printer for ejecting (edible) ink towards the print surface and thus printing pre-selected content on a print surface positioned below the path of the print head 16. The printer 14 is in communication with a controller wherein software may be used to control printing of the content on one or a plurality of food products. The print head 16 and associated cartridge and gantry may be carried by the upper printer body 150 and thus are secured to the upper portion of the printer body 150.

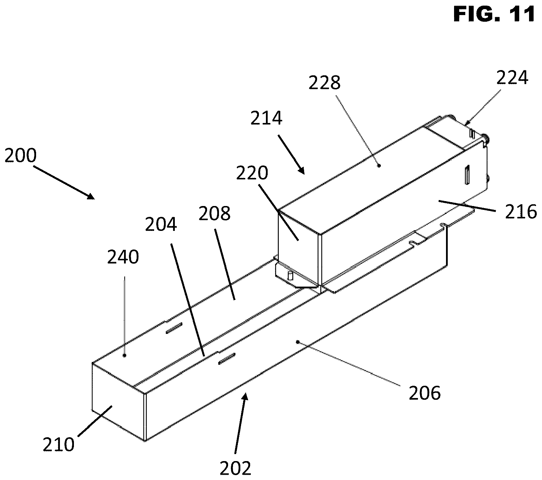

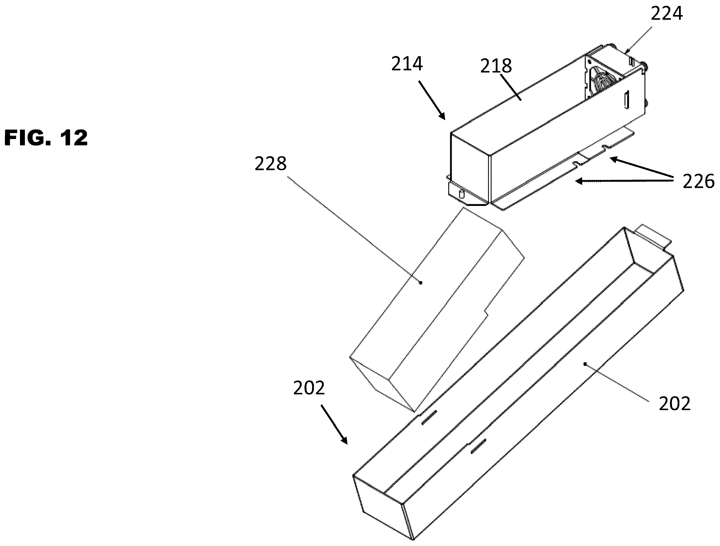

In one or more embodiments, an ink mist collection system as illustrated at 100 in FIG. 11-12 may be incorporated. While the ink mist collection system is described herein in connection with or otherwise incorporated into a printing system configured for printing on the surface of a food product as illustrated in FIGS. 1-10, such an ink mist collection system can be incorporated into any inkjet printing system or the like. As such, the embodiments described and illustrated here provide one illustrative example of an environment for the ink mist collection system and not considered to be limiting in any manner.

The ink mist collection system 400 utilizes a channel 110 which may be defined as having a base and side walls providing a length and a depth to the channel 110. The channel 110 leads from the print area to the filtration system 112 which comprises at least one filter 114. The system 100 may further include a directed air flow as illustrated by arrow 130 from the print area to or through the channel 110 and then to the filtration system 112 so as to encourage collection of the mist or other unused but ejected ink droplets by the filter 114. For example, a fan 116 may be provided to direct the airflow through the channel 110 and additionally or alternatively a negative airflow such as a vacuum may be provided near the filtration system 112 to pull the airflow through and along the channel 110.

The filter 114 is supported at or near a terminal end or side of the channel 110 and/or at least partially extending into the depth of the channel 110 at the terminal end of the channel 110. The filter 114 and channel 110 are positioned in a printing system 10 in a space adjacent to the print area in the printer system 10 as described in further detail below. For example, the channel 110 and filtration system 112 are positioned adjacent to or offset from print area 18 and behind or adjacent to an ink spray 118 generated during printing. The channel 110 initiates at or near the print area 18 and leads away therefrom so as not to interfere with the printing of products 12 in automatic succession.

In one embodiment, the filter 114 is supported by a filter holder 120 and is removable therefrom for replacement or cleaning. The filter 114 may be comprised of a porous foam material that can be easily cleaned for re-use or replaced after use. The filter holder 120 may be fixed to the printer system 10, fixed to the channel 110, or the filter holder 120 and channel 110 may be supported by a removable tray 122 which slides into the printer 14 at or in the print area 18.

The filter 114 is removably supported within the filter holder 120 and in a manner such that air flow through the filter 114 is allowed for collection of ink mist therein. The filter holder 120 may be a cage or other device not significantly obstructing the surface area of the filter 114 or impeding the ability of the filter 114 to catch or collect mist directed thereto.

Interior surfaces 126 of the channel 110 may further collect unused ink droplets or other ink debris directed away from the print area 18 and contacting the interior surfaces 126 of the channel 110 or otherwise not collected by the filter 114. As the channel 110 is removable from the printer 14, the channel 110 and filter 114 are thus removable for cleaning.

One or more of the channel 110 and the filter holder 120 may be comprised generally of a metal such as aluminum or stainless steel, but may alternatively or additionally comprise plastic materials. The channel 110 and/or filter holder 120 are easily cleanable by rinsing, wiping, washing or combinations thereof when accessed. The channel 110 is accessible in a printer system 10 wherein the printer comprises a main body and a support base that are removably or pivotally connected to one another, such that an interior cavity is accessible by way of opening the printer system 10 up. Once the interior cavity is exposed, the channel 110 and filtration system 112 are accessible for cleaning and/or removal.

In the embodiment illustrated, the channel 110 is a rectangular body having a length co-extending at least partially along a width or a depth of the printer system 10. The channel 110 extends a length away from the print area such that the filtration system 112 is spaced apart from or otherwise offset from the print area of print system 10.

In embodiments where the printer system 10 is configured as a hinged printing system 10 wherein an upper printer body 150 supporting the printing components such as the print head 14 is hingedly connected to a base portion 160, the channel 110 and filtration system 112 are connectable to the upper printer body 150 of the printer system 10 or the base portion 160 and are thus accessible when the printer system 10 is opened about the hinged connection 170 which pivotably connects the upper body 150 and the base portion 160. Food products enter the printer system 10 in a space 152 between the upper body 150 and the base portion 160 for printing. The channel 110 extends along and into this space 152 and is accessible from this space 152 when this space 152 is opened up by way of opening the printing system 10 about the hinged connection 170. In some embodiments the channel 110 may also be removable for cleaning.

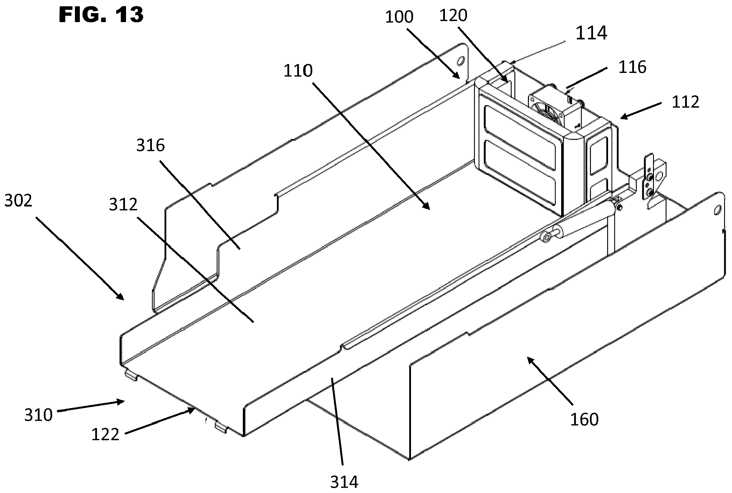

As illustrated in FIG. 13, a debris collection system 302 comprises a debris tray 310 that is removably positioned within the print area 18 of the printing system 10. The debris tray 310 may be rectangular in shape so as to fit within the print area 18 of the printing system and catch the debris generated therein. For example, the debris tray has a floor 212 and perimeter side walls 314, 316, 318 but is open along its front to receive items for printing and along its top to receive and collect debris from the printer system 10.

The debris tray 310 may be comprised of a metal such as stainless steel or aluminum, the tray 310 may also be comprised of plastic or other durable but lightweight materials that are easily cleanable for reuse. The debris tray 310 for example can be rinsed, washed, or wiped and dried clean between uses and can withstand sanitization procedures and soaps. The debris tray 310 is removable and replaceable.

In embodiments where the printer system 10 is a hinged printed system 10 or otherwise configured for hingedly opening to the print area, the debris collection tray 310 is positioned in a space 152 between a upper printer body 150 and a support base 160 of the printer system 10. The print area for the food products is within the space or cavity 152 formed between the upper print body 150 and the support base 160. As the support base 160 has dimensions that provide a height to the print area allowing the food products to be delivered from outside of the printer system 10 into the cavity 152 and below the print head 16 within the print area in an unobstructed manner wherein the upper printer body 150 supports the print head thereabove. While, the upper printer body 152 supports many of the operational components of the printer system such as a print head 16 and the gantry along which the print head is moveable, supports ink tank installations, and one or more of control and power components to the printer system, the support base 152 supports at least the debris collection system 300. The debris tray 310 is removably connectable to a floor 162 of the support base 160 by sliding therein or by way of clips, channels or other mating connectors which allow for securing the debris tray 310 in the cavity 152 below the food product path in the printer system 10 in a manner that is easily removable for cleaning.

The debris collection and removal tray 310 may also support a spent ink collection and filtration system 200.

To remove debris such as crumbs and clean the debris tray 310 for further uses, the printer system 10 is opened about a hinged connection 170 to expose the cavity 152 for easy removal and replacement of the debris tray 310.

During printhead maintenance, ink is fired from all the nozzles of the printhead to keep the nozzles clear for preserving the ink cartridge when nozzles are not in use. All of this expelled ink must be captured so it does not soil areas of the printer that must remain clean yet are areas that are difficult to clean. The maintenance system comprises a removable tub and a filter that can be easily removed from the tub, manually and thus without the use of tools.

The removable tub is a tray that is removable from the printer and catches the actual ink droplets without a foam material in the tub. The filter is provided in a second, separate tray and the filter is removable from its tray for cleaning. This arrangement allows the system to catch the ink without using a foam material for catching the ink. Instead, foam may be incorporated into the filter portion of this system but is not used in the tub for catching ink. The system described herein is NSF certified. Foam in the tub would be saturated when wet, allowing bacterial growth. Thus, the removable waste ink system described herein is washable to further prevent bacterial growth in the system.

The ink maintenance system described herein can be incorporated into any type of ink-based printing system. However, by way of non-limiting example, one embodiment described herein incorporates the ink maintenance system into a food product printing system.

An ink maintenance system 200 of one or more embodiments described herein can be positioned near the print head storage 16 or standby position of any printer system type so that ink cartridge and print nozzle cleaning and maintenance can be carried out between printing procedures. The ink maintenance system 200 is illustrated generally in FIG. 13.

The ink maintenance system 200 comprises a catch tray or tub 202 and a channel 204 which couples to the catch tray 202. For example, the catch tray 202 is rectangular in shape having a floor 204 and side walls 206 and 208 with end walls 210 and 212. The catch tray 202 has an open top and an interior cavity for collecting ink droplets. An open area 240 of the catch tray 202 is configured for receiving the ejected ink during maintenance. Thus, the ink generally collects in the tray 202 for subsequent cleaning of the tray 202 and removal from the system, as described in further detail below.

The channel 214 is also rectangular in shape and having a length that is shorter than the catch tray 202 but a width that substantially matches the width of the catch tray 202. The channel 214 has side walls 218 and 220 with at least one end wall 222 and an open top with an interior cavity, where at least a portion of the base or bottom of the channel 214 is open for allowing air flow from the tray 202 through a filter 224 held therein. The channel 214 also supports a fan 224 therein or otherwise coupled thereto. The fan 224 may be positioned on one end of the channel 214 and thus provide a second end wall of sorts. While the embodiment illustrated herein includes a rectangular shaped catch tray 202 and corresponding channel 214, other shapes and dimensions are contemplated and within the scope of this disclosure as vary to fit into different size, style and type printer systems. The channel 214 also comprises tabs or other elements 226 outside of the channel 214 extending from an open or substantially open bottom which may comprise a mesh or slotted opening and serving as mechanisms for coupling the channel 214 on top of and thus covering at least a portion of the open top of the catch tray 202. These tabs or other elements 226 may also be used for removably securing the system 200 and/or the channel 214 in a printer system for secure use.

An interior of the channel 214 is sized to act as a filter holder and thus is configured to hold a filter 228 in combination with the fan 224 which directs air flow from the catch tray 202 to the filter 228. Thus, ink ejected into the catch tray 202 that is airborne or otherwise not collected on a surface of the catch tray 202 is pulling into the filter 228 and thus prevented from entering the printer system. Thus, the system 200 has components that cooperate for catching and cleaning ink from one or more nozzles of a print head of a printer. The fan 224 aids in directing air flow and controlling the direction of any ink mist generated such that ink mist is caught by the filter 228 and/or in or on the interior surfaces of the catch tray 202. The filter 228 is removable from the channel 214 for subsequent cleaning and/or replacement and the catch tray 202 and channel 214 are removable from the printer system and separable from one another for cleaning of the interiors of both the tray 202 and the channel 214. The ink maintenance system allows for removal of ink from the nozzles of a print head to maintain the integrity of the print nozzles and ink cartridges and to prevent ink from depositing on other areas of the printer.

The catch tray 202 and the channel 214 may be comprised of metal such as aluminum or stainless steel, although additional materials able to withstand the environment within a printer and being easily cleanable via wiping and/or washing such as various hard plastics can be used. The material of the tray 202 and channel 214 should be durable and lightweight.

In any one or more of the embodiments described herein, the food product is a dessert item such as a cookie. However, while examples of food items include various shapes, sizes, and types of cookies, the food items that can be printed with this system are not so limited. Frosting sheets, rice paper, bakery goods having at least one substantially flat surface for printing an image thereon, and other food items may be printed using this system. The delivery tray may be configured with positioning mechanisms which are tailored to the specific shape, size, thickness, type etc. of food product to be printed and thus, the system may be provided as a kit including the printer described herein including receiving arm and one or more delivery trays of various sizes, dimensions and for delivery of one or more different food products or food products having different dimensions.

In any one or more of the embodiments described herein, the system is further configured with one or more control boards in communication with a computer or controller for configuring and initiating the printing process. However, the delivery tray is configured with one or more positioning mechanisms such that in combination with the receiving arm as a food product is delivered to the printer and positioned below the print head, the need for a sensing system or series of sensors for detecting the position of the food product is eliminated. A sensor may be utilizing in the printer for confirming the presence of the food product in the printer for printing. The sensors may be positioned on the print head and used to detect only the presence of the substrate for printing. The system is a fixed spot printing system so there is no need for scanning for position of the print surface. The system also allows for loading of unprinted food products and unloading of printed food products during printing or otherwise "on the fly." The control board or boards allow for the delivery of a first food product, printing of the first food product, return of the first food product, advancing of the delivery tray to provide a second food product for delivery, delivery of the second food product, printing of the second food product, return of the second food product to the delivery tray and advancing for delivery of one or more subsequent food products for printing and return. Thus, the system allows for the automatic delivery, printing on and return of a plurality of food products.

Although the present disclosure has been described with reference to preferred embodiments, workers skilled in the art will recognize that changes may be made in form and detail without departing from the spirit and scope of the disclosure.

## Claims

1. A printer ink mist collection system comprising:
a channel extending from a print area to a filtration system wherein the filtration system comprises one or more filters and wherein the channel is configured to direct airborne ink and mist generated during printing to the filtration system, wherein the channel and filtration system are removable from a printer for purposes of cleaning the ink collection system, and wherein the print area is positioned within a length of the channel spaced apart from the filtration system such that printing occurs within at least a portion of the channel, and wherein the channel, filtration system and print area are positioned within a main body of the printer.

2. The system of claim 1, wherein the filtration system comprises a filter that is removably supported in a filter holder.

3. The system of claim 1 wherein the channel comprises a tray having one or more side walls and wherein the channel has an opening near the print area for entry of airborne ink and mist.

4. The system of claim 1 and further comprising a fan for directing an airflow through the print area or ink spray and into the channel.

5. The system of claim 1 wherein the channel is constructed of a metal and is cleanable for reuse.

6. The system of claim 1, wherein the printer comprises:
a print head movable within a print area, the print head configured to accept and dispense ink from one or more ink cartridges; and
a channel extending from the print area to the ink mist filtration system and configured to direct the ink mist from the print area to the filtration system.

7. The system of claim 6 wherein the printer comprises the main printer body and a support base wherein the main printer body is positioned above the support base and a cavity is provided between the main printer body and the support base and wherein the print area is positioned within this cavity.

8. The system of claim 6 wherein one or more hinges secure the main printer body to the support base such that a hinged connection is provided for accessing the cavity.

9. The system of claim 6 and further comprising:
a receiving arm supported by the printer and extendable and retractable into the cavity and across a path of a print head of the printer to deliver substrates to the print area for printing and remove printed substrates from the print area.

10. The system of and one of claims 6 to 9 wherein the printer is configured for printing on a surface of one or more food products and wherein the food products are delivered and received within the cavity for printing thereon.

11. The system of any one of claims 6 to 10 and further comprising a fan for directing air flow.

12. A method of collecting airborne ink mist from a printer, the method comprising:
printing content on a substrate with ink ejected from one or more ink cartridges carried by
a print head when the substrate is positioned at least partially within a channel;
directing airborne ink mist generated during ejection of the ink and not deposited on the substrate away from a print area of the printer through the channel to a filtration system comprising one or more filters; and
accessing the channel and filtration system within the printer for cleaning the channel and filter after collection of ink mist.

13. The method of claim 12 wherein accessing the channel and filtration system comprises opening the printer via a hinged connection between two portions of the printer wherein the channel and filtration system are housed within a cavity between the two portions of the printer.

14. The method of claim 12 wherein the substate comprises a food product or edible element having a substantially flat surface, cookies, frosting sheets, rice paper, or combinations thereof.
